(19) Europäisches Patentamt
European Patent Office
Office européen des brevets

(11) **EP 2 817 158 B1**

(12) **EUROPEAN PATENT SPECIFICATION**

(45) Date of publication and mention
of the grant of the patent:
**29.03.2017  Bulletin 2017/13**

(21) Application number: **13707021.5**

(22) Date of filing: **07.02.2013**

(51) Int Cl.:
***B42D 25/00*** *(2014.01)*    ***G07D 7/06*** *(2006.01)*

(86) International application number:
**PCT/GB2013/000047**

(87) International publication number:
**WO 2013/124607 (29.08.2013 Gazette 2013/35)**

(54) **OPTICAL MULTILAYER**

OPTISCHE MULTISCHICHT

MULTICOUCHE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2012  GB 201203183**

(43) Date of publication of application:
**31.12.2014  Bulletin 2015/01**

(73) Proprietor: **Qinetiq Limited
Farnborough, Hampshire GU14 0LX (GB)**

(72) Inventors:
• **HOOPER Ian Richard
Exeter
Devon EX4 4QL (GB)**
• **LAWRENCE Christopher Robert
Farnborough
Hampshire GU14 0LX (GB)**
• **SAMBLES John Roy
Exeter
Devon EX4 4QF (GB)**
• **TREEN Andrew Shaun
Exeter
Devon EX6 7QS (GB)**

(74) Representative: **Clarke, Alan
QinetiQ Limited
Intellectual Property
Malvern Technology Centre
St Andrews Road
Malvern, Worcestershire WR14 3PS (GB)**

(56) References cited:
**WO-A1-00/72275      WO-A1-2011/161482
CN-A- 101 738 649**

## Description

## Field of the Invention

The present invention relates to an optical multilayer comprising textured surfaces and methods of manufacture. The present invention also relates to articles comprising the optical multilayer and the use of said optical multilayer in anti-counterfeiting and/or security applications.

## Background of the Invention

It is known to use multilayered surfaces to produce optical effects which can be used in security devices and markings and/or anti-counterfeiting tags and markings. These multilayered surfaces may be referred to as optical multilayers.

For example, WO 00/72275 discloses a specialised surface for use in anti-counterfeiting. The textured multilayered surface described in WO 00/72275 comprises a substrate and at least two thin layers of material having different refractive indices, such that selective wavelengths are transmitted and/or reflected, and a grooved, pitted or waveform profile. When illuminated from directly above, the surface of the multilayer presents regions of multilayer at normal incidence, and others at discrete angles, for example around 45°. As a result, the surface produces two colour components of light. However, the two colours combine to produce a uniform single colour appearance. Document EP 0 366 858 A1 discloses an optical multilayer according to the preamble of claim 1.

There is a continued need for alternative and/or improved methods of marking and/or authenticating articles, though numerous challenges remain. For example, in certain circumstances it is desirable to be able to authenticate an article without necessarily having to revert to the use of additional equipment, which can be costly. In addition, it would be desirable to be able to provide articles which are capable of revealing visually appealing features and are suitable for every day use.

## Summary of the Invention

The present invention is based on the finding that by combining regions of ordered and disordered texture on a multilayered surface then the appearance of the surface will provide differentiable effects when viewed in different lighting conditions, for example when viewed in diffuse lighting and directional lighting. More specifically, the inventors have found that it is possible to create a textured surface comprising a first region and a second region wherein the first region of the surface exhibits diffractive effects when viewed in directional light such as direct sunlight and exhibits no, or fewer, or minimal diffractive effects when viewed in diffuse light, (for example artificial lighting such as that emitted from a tungsten bulb). The second region may be undiffractive irrespective of the lighting conditions. The directional light and diffuse light may be visible light or non-visible light. For example, the directional light and diffuse light may be visible light (typically about 390nm to 750nm), infra red light (typically about 750nm to 1mm) or ultraviolet light (typically about 10nm to 390nm).

Accordingly, in a first aspect of the present invention, there is provided an optical multilayer comprising at least two textured layers, said layers having different refractive indices, wherein each of the textured layers comprise at least one first region, said first region comprising optical microstructures of constant periodicity, and each of the textured layers comprise at least one second region, said second region comprising optical microstructures which are of non-constant periodicity or are disordered. The textured layers in accordance with the present invention may be referred to herein as surface textured layers.

The optical multilayer may be in contact with a substrate. For example, the optical multilayer may be laid or deposited onto a substrate. The substrate may be a transparent substrate or an opaque substrate. The substrate may be light absorbing, for example the substrate may be a black substrate. The optical multilayer may be laid or deposited onto a black substrate or the optical multilayer may be laid or deposited onto a transparent substrate wherein the transparent substrate may be in contact with, or subsequently brought into contact with, a light absorbing or black substrate.

The optical multilayer is suitable for use in the authentication of articles. More specifically, the optical multilayer is suitable for use in anti-counterfeiting and/or security applications.

The at least one first region may comprise at least five (for example at least six or at least seven) optical microstructures which have a constant periodicity, or are equally spaced, in a single direction. There may be present a plurality of said first regions distributed across the surface of each of the textured layers. The "single direction" in connection with a particular first region may be a different direction when compared with a further first region. The optical microstructures may have a periodicity of greater than about $1\mu$m, for example about $3\mu$m to $20\mu$m for example about $5\mu$m. The periodicity is the distance between the centre of two adjacent optical microstructures. The optical microstructures in the at least one first region may be of the same size and/or shape. The optical microstructures in the at least one first region may be identical.

Accordingly, the present invention provides an optical multilayer comprising at least two textured layers, said layers having different refractive indices, wherein each of the textured layers comprise at least one first region, said first region comprising optical microstructures of constant periodicity, and each of the textured layers comprise at least one second region, said second region comprising optical microstructures which are disordered, and further wherein the optical multilayer consists of or comprises five textured layers, wherein adjacent layers do not possess the same refractive index, and wherein each of the textured layers comprise at least one first region and at least one second region.

The present invention also provides an optical multilayer comprising at least two textured layers, said layers having different refractive indices, wherein each of the textured layers comprise at least one first region, said at least first one region comprising optical microstructures of constant periodicity wherein at least five consecutive (or adjacent) optical microstructures are arranged in a straight line and are equally spaced and each of the textured layers comprise at least one second region wherein said second region does not comprise optical microstructures of constant periodicity wherein at least five consecutive (or adjacent) optical microstructures are arranged in a straight line and are equally spaced.

The arrangement of optical microstructures is such that a differentiable effect or effects may be observed (or measured) when viewed (or measured) in different lighting conditions (for example (i) sunlight or (ii) room lighting, for example from strip lighting). More particularly, the optical multilayer exhibits observable (or measurable) diffraction when the diameter of the circular spatial coherence area of the incident light source ($A_c$) is greater than the distance corresponding to the total distance covered by a straight line that joins five (or more than five) adjacent optical microstructures which possess a constant periodicity and are equally spaced in a single direction in said at least one first region. Said light may be referred to herein as directional light. Light which does not obey this condition may herein be referred to as non-directional light or as diffuse light. The light may be visible or non-visible light (for example infra red light or ultraviolet light). When the light is visible light, the arrangement of optical microstructures is such that a differentiable effect or effects when viewed in different lighting conditions (for example (i) sunlight or (ii) room lighting, for example from strip lighting) may be observed when viewed by the unaided human eye.

The spatial coherence area, $A_c$, is a measure of the coherence and can be calculated from van Cittert-Zernicke theory:

$$A_c = \frac{D^2 \lambda^2}{\pi d^2}$$

where O is the distance between the light source and the illuminated object, lambda is the wavelength of light and d is the diameter of the light source. For sunlight, the coherence length (defined as the diameter of the circular spatial coherence area) is approximately $30\mu$m. For a tungsten bulb (diameter ~2cm) at a distance of 50cm the spatial coherence length is ~$7\mu$m which does not give rise to diffraction when the periodicity is about $1.4\mu$m or

more.

The optical multilayer in accordance with the various aspects of the present invention is suitable for use in authenticating articles. As such, in a second aspect of the present invention there is provided an article comprising the optical multilayer in accordance with the present invention. The article may typically take the form of a high value document or the packaging that surrounds an item of value. For example, the article may be a banknote, cheque, credit card, identity card, medical card, ticket, legal document or deed or the article may be a label, casing or shrink-wrap.

The optical multilayer may be used for applications relating to anti-counterfeiting and/or security applications. Therefore, in a third aspect, there is provided the use of an optical multilayer in accordance with the present invention to determine whether or not an article is counterfeit or genuine.

According to a fourth aspect of the invention, there is provided a method of determining whether or not an article is genuine or counterfeit comprising:

(i) providing an optical multilayer according to the present invention;
(ii) observing the optical multilayer when illuminated with diffuse light;
(iii) observing the optical multilayer when illuminated with directional light;
(iv) comparing the appearance of the optical multilayer in (ii) and (iii).

Optionally, the optical multilayer may be compared with an authentic standard.

According to a fifth aspect of the invention, there is provided a method of making an optical multilayer in accordance with the present invention comprising depositing an optical multilayer on to a replica substrate, wherein said replica substrate comprises at least one first region, said first region comprising optical microstructures of constant periodicity and at least one second region, wherein said second region comprises optical microstructures which are disordered.

The use of the optical multilayer in accordance with the present invention provides a number of beneficial features. For example, the optical multilayer provides for easy and straight-forward assessment of whether or not an article is genuine or counterfeit without necessarily requiring the use of additional equipment. The optical multilayer may readily be made visually appealing, or eye-catching, which can be of importance if incorporated in an article which is to be used by the general public on a regular basis. The optical multilayer in accordance with the present invention may be used to provide an aesthetic effect regardless of whether or not it is to be used in connection with anti-counterfeiting and/or security applications. As such, and in accordance with a further aspect of the present invention, the use of an optical multilayer in accordance with the present invention to provide an aesthetic effect is provided.

## Detailed Description of the Invention

### Optical multilayer

The optical multilayer may consist of two layers or comprise at least two layers. The layers are in contact with each other. The optical multilayer consists of or comprises two layers wherein the layers which are in contact with each other possess a different refractive index. The refractive indices (at optical frequencies) of the layers may, independently of each other, be selected from about 1 to about 5, for example about 1 to about 3. Suitable materials for use as optical multilayers are generally known in the art and may be selected from known materials provided the optical multilayer consists of or comprises two layers possessing different refractive indices. The at least two layers may be made from metal comprising material, for example metal oxide and/or metal sulphide. For example, the at least two layers may be made from zirconia ($ZrO_2$), zinc sulphide (ZnS), tantala ($Ta_2O_5$) or magnesium fluoride ($MgF_2$). Other suitable materials are silica ($SiO_2$). The optical multilayer may be made from alternating layers of any combination of the listed materials. For example, the optical multilayer may be made from alternating layers of silica and tantala. The at least two layers may be made from a polymer, for example polypropylene. More specifically, the layers may be selected from the following materials with the refractive indices (at optical frequencies) indicated in brackets: silica (about 1.46); zirconia (about 2.1); zinc sulphide (about 2.3); magnesium fluoride (about 1.38); tantala (about 2.2).

More typically, the optical multilayer has more than two layers. For example, the optical multilayer may consist of or comprise at least five layers, or may consist of or comprise at least six layers, or may consist of or comprise at least seven layers. Any two layers which are in contact with each other may possess a different refractive index. For example, in an optical multilayer comprising or consisting of five layers, the refractive indices may be n1, n2, n1, n2, n1 respectively wherein n1 and n2 are different. The layers may comprise more than two materials. For example, for the afore-mentioned five layer system each of the layers may be made from a different material. For example, for an optical multilayer comprising at least five layers, then the refractive indices may be n1, n2, n3, n4, n5 for each layer respectively wherein n1, n2, n3, n4, n5 are all different or at least adjacent layers possess different refractive indices.

One of the at least two layers may be in contact with a substrate. For example, one of the layers may be laid or deposited onto a substrate. The substrate may consist of or comprise a polymer, for example polypropylene, or may consist of or comprise a glass, for example silica. The substrate may consist of or comprise a semiconductor, for example silicon. The substrate may be transparent or substantially transparent. Alternatively, the substrate may be non-transparent or opaque. For example, the substrate may be a black substrate. One of the at least two layers may be deposited on one side of the substrate such that the substrate and the at least two layers are coplanar. The at least two layers may possess different refractive indices such that selective wavelengths/colours are transmitted and/or reflected. The at least two layers are each typically 10nm to 500nm thick. The thickness of each of the layers is selected independently of each other and the thickness of each layer may be the same or different. The substrate may comprise a transparent or substantially transparent substrate and a black substrate, wherein the transparent or substantially transparent substrate is in contact with one of the at least two layers and the transparent or substantially transparent substrate is in contact with the black substrate.

By way of example, an optical multilayer made in accordance with the present invention was as follows: 95.4nm of tantala, 68.8nm of silica, 91.1nm of tantala, 138.2nm of silica, 15.9nm of tantala, 132.9nm of silica, 96.4nm of tantala, 68.8nm of silica.

The surfaces of the layers are textured. For example, the layers may be pitted or dimpled so that the surfaces of the layers comprise a plurality or array of pits, dimples, indentations, concave depressions or wells. The pits, dimples, indentations, concave depressions or wells may be circular in shape on viewing the textured surface from above. The optical microstructures may comprise an array of hemispherical dimples, or an array of pyramids, or an array of cones, or an array of truncated pyramids, or an array of truncated cones. The sides of the pyramids/truncated pyramids and the cones/truncated cones may be angled at about 45°.

### Optical microstructures

The textured layers comprise at least one first region, wherein the at least one first region comprises optical microstructures of constant periodicity and at least one second region wherein the at least one second region comprises optical microstructures which do not possess constant periodicity, i.e. the optical microstructures are disordered or aperiodic. For example, in the second region there may not be present optical microstructures which are equally spaced in a given direction. The first region may comprise a minimum number of optical microstructures which possess a constant periodicity. For example, the first region may comprise at least five, or at least six, or at least seven sequential, or consecutive, or adjacent optical microstructures which possess a constant periodicity. For example, in a given first region the optical microstructures may be equally spaced in a single direction. The optical microstructures in the first region may be the same size and shape. The optical microstructures in the first region may be identical. The optical microstructures in the first region may have a periodicity of greater than about $1\mu$m, for example about $3\mu$m to

20μm for example about 5μm. The at least one first region, or regions of constant periodicity, may be provided by arranging the optical microstructures in an appropriate pattern, for example a hexagonal arrangement, or a grid arrangement, for example a square grid arrangement. The "single direction" associated with a particular first region may be a different direction when compared with a "single direction" associated with a further first region.

The textured layers also comprise at least one second region which comprises optical microstructures of non-constant periodicity or which are disordered. In the second region, the optical microstructures may exhibit varying periodicity or be aperiodic in at least one direction across the surface. The degree of disorder in the second region is such that diffractive effects associated with the second region are not visible or are minimal when viewed in directional light such as direct sunlight. In the at least one second region there may not be present at least five optical microstructures which possess a constant periodicity. For example, in the second region there may not be present at least five sequential, or consecutive, optical microstructures which are equally spaced in a single direction.

The optical microstructures may consist of or comprise a series of dimples or pits or concave depressions (any of which may be hemispherical) in the layers. The optical microstructures may consist of or comprise a series of depressions in the layers in the form of pyramids or truncated pyramids, or cones or truncated cones. The optical microstructures may consist of or comprise a series of depressions in the layers in the form of channels or grooves. The channels for grooves may be rectangular or square or "V"-shaped or "U"-shaped in cross-section when viewed along the length thereof. The size of the optical microstructures may be about 1μm to 100μm, for example about 1μm to 50μm or about 1μm to 10μm. For example, the width, or diameter, of the optical microstructures may be about 1μm to 100μm, for example about 1μm to 50μm or about 1μm to 10μm. The width, or diameter, of the optical microstructures may be about 50μm to 100μm. The depth of the optical microstructures may be about 1μm to 100μm, for example about 1μm to 50μm or about 25μm to 50μm or about 1μm to 10μm. The size of the width (or diameter) and depth of the optical microstructure may be selected independently of each other. In an embodiment of the invention the optical microstructures may be about 50μm to 100μm in width or diameter and about 25μm to 50μm in depth. The dimensions of each of the optical microstructures may be independently selected. For each of the afore-mentioned ranges, in relation to the size of the optical microstructures, the lower end of the range may be about 2μm.

The textured surfaces may comprise optical microstructures wherein the microstructures are provided by a plurality of repeating three dimensional features, or irregularities, which are proud of the surface and arranged on a scale of about 1μm to about 100μm, inde-

pendently, in width, depth and pitch, for example about 1μm to about 50μm, or about 1μm to about 10μm. A suitable embodiment of such a feature comprises a plurality of pyramids.

The arrangement of optical microstructures is such that a differentiable effect or effects may be observed (or measured) when viewed (or measured) in different lighting conditions (for example (i) sunlight or (ii) room lighting, for example from strip lighting). More particularly, the optical multilayer exhibits observable (or measurable) diffraction when the diameter of the circular spatial coherence area of the incident light source ($A_c$) is greater than the distance corresponding to the total distance covered by a straight line that joins five (or more than five) adjacent optical microstructures which possess a constant periodicity and are equally spaced in a single direction in said at least one first region. Said light may be referred to herein as directional light. Light which does not obey this condition may herein be referred to as non-directional light or as diffuse light. The light may be visible or non-visible light (for example infra red light or ultraviolet light). When the light is visible light, the arrangement of optical microstructures is such that a differentiable effect or effects when viewed in different lighting conditions (for example (i) sunlight or (ii) room lighting, for example from strip lighting) may be observed when viewed by the unaided human eye.

The spatial coherence area, $A_c$, is a measure of the coherence and can be calculated from van Cittert-Zernicke theory:

$$A_c = \frac{D^2 \lambda^2}{\pi d^2}$$

where D is the distance between the light source and the illuminated object, lambda is the wavelength of light and d is the diameter of the light source. For sunlight, the coherence length (defined as the diameter of the circular spatial coherence area) is approximately 30μm. For a tungsten bulb (diameter -2cm) at a distance of 50cm the spatial coherence length is ~7μm which does not give rise to diffraction when the periodicity is about 1.4μm or more.

With regard to the at least one second region of optical microstructures wherein the optical microstructures are disordered, the disorder may be introduced in a number of ways. Disorder, or non-constant or varying periodicity, may be achieved by providing microstructures of varying size (for example diameter) and/or in a random pattern. Such an array of microstructures may be achieved by the use of e-beam lithography to initially fabricate a master template. Electroplated shims may then be formed allowing the structure to be simply and cheaply replicated.

Manufacture of the textured optical multilayer

An optical multilayer in accordance with the present invention may be made by fabricating a master mould in a suitable material, for example silicon. To form the mould, a silicon wafer may be coated with a thin (approximately 1 $\mu$m) layer of photoresist. Suitable examples of photoresist are Shipley S1800 resist (a commercially available g-line positive photoresist for optical lithography). The photoresist layer may be exposed to ultraviolet light through a photomask comprising holes of a suitable size, depending on the size of the optical microstructures (e.g. indentations or dimples) which are required. For example, the photomask may comprise holes of about 500nm or 1 $\mu$m to about 100 $\mu$m in diameter. The holes may also be arranged in a desired pitch, for example a regular repeating pattern. The photoresist layer is developed before the silicon is wet etched. The silicon etchant begins etching the silicon wafer through the holes and removes silicon isotropically (the same rate in all directions). As such, etching through the small hole in the photomask produces an approximately hemispherical dimple in the silicon wafer when the etching process is halted after the appropriate time, with the diameter of the dimples corresponding to the distance separating the holes in the photomask. The photoresist is subsequently removed leaving an array of approximately hemispherical dimples in the silicon wafer surface. Following its formation, the (silicon) mould may be electroplated. For example, a nickel shim containing the reverse pattern of the dimple structure may be formed by electroplating the initial silicon mould with an approximately 300 $\mu$m thick nickel layer. The nickel shim may be used to create a replica or a number of replicas, typically in a polymer, through standard replication techniques, for example by embossing, or by coating with curable polymers which, following curing, are removed from the shim. The resulting polymer layer is patterned with the original dimple array that was fabricated in the original (silicon) mould. The replica or replicas may then be coated with an appropriately designed optical multilayer. This may be achieved through sputter coating the replica or replicas with appropriate materials. By way of example, suitable sputtering methods are ion-beam sputtering, reactive sputtering, ion-assisted deposition, high target utilization sputtering, high power impulse magnetron sputtering and gas flow sputtering. The replica or replicas may be coated with alternating layers of materials such as silica and zirconia. The materials may be chosen to provide a desired colour upon viewing.

Uses of the optical multilayer

The optical multilayer in accordance with the present invention may be used in applications relating to anti-counterfeiting and/or security. For example, the optical multilayer may be incorporated into articles for use in brand protection and document security. The article may typically take the form of a high value document or the packaging that surrounds an item of value. For example, the article may be a banknote, cheque, credit card, identity card, medical card, ticket, legal document or deed or the article may be a label, casing or shrink-wrap.

The surface of an article, such as a credit card, may be modified by the presence of an optical multilayer of an appropriate size and shape, for example a circle of approximately 2.5cm diameter. The regularly spaced component of the dimpled multilayer (i.e. the periodic region) may be defined so as to form the shape of a recognisable or distinct character, (for example an alphanumeric character), or pattern, whilst the other regions of the multilayer, bounded by or surrounding the character, exhibit a disordered (random) arrangement of multilayer dimples. The structure is designed so that both the random and periodic regions appear to be visually identical in all but highly directional light. When viewed under directional light from direct sunlight, or a collimated hand-held torch, or via a table-top illuminator and viewer designed for use by a shopkeeper or bank-teller, the periodic structure will exhibit diffraction, and the shape of the periodic region will become apparent. It should be noted that this effect could be viewed directly by the human eye or be machine-read, utilising a device such as an electronic colour-sensor or other (electronic) device suitable for use at the appropriate wavelength range. Alternatively, a photographic image may be produced for human inspection.

**Brief Description of the Figures**

The invention will now be described, by way of example only and without limitation, with reference to the following Figures and Examples, in which:

Figure 1a illustrates a perspective view of an optical multilayer in accordance with the invention;

Figure 1b is a cross-sectional view through the optical multilayer illustrated in Figure 1a;

Figure 2 illustrates an article incorporating an optical multilayer in accordance with the present invention and the effect of viewing the optical multilayer under diffuse lighting and directional lighting;

Figure 3 is an SEM image of a sample made in accordance with the present invention and illustrates a first region of a textured surface wherein the optical microstructures are equally spaced.

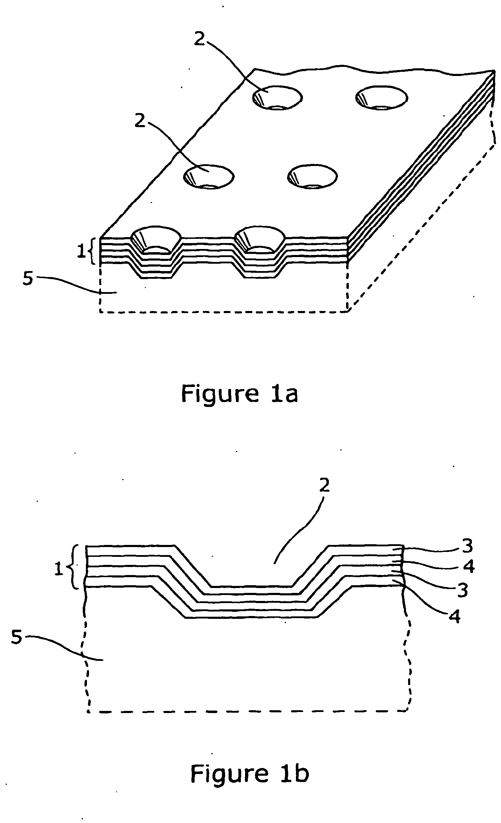

Figures 1a and 1b illustrate a perspective view of an optical multilayer (1) in accordance with the present invention and a cross-sectional view thereof respectively. In the embodiment shown, the textured surface is dimpled with optical microstructures, i.e. circular depressions (or truncated cones) indicated generally at (2). The multilayer comprises interleaved layers of material (3, 4) possessing refractive index n1 and n2 respectively (where n1 and n2 are different). Suitable examples of materials for the layers of material (3, 4) include metal comprising material, for example metal oxide or metal sulphide. Suitable examples of metal oxide and metal sulphide are $ZrO_2$ and ZnS respectively. The at least two layers may be made from a polymer. The optional presence of a substrate (5) onto which the multilayer (1) may be deposited is also shown. The substrate (5) may be transparent or substantially transparent. Alternatively, the substrate may be non-transparent or opaque (e.g. a black substrate).

The substrate may be made of polymer, polypropylene being a suitable example, or a glass such as silica. Methods of depositing the optical multilayer (1) onto the substrate include thermal evaporation, sputtering, electron beam deposition or laser oxidation. In the embodiment shown in Figures 1a and 1b, the optical multilayer (1) may be made by first fabricating a master mould in silicon. More specifically, a silicon wafer may be coated with a thin (approximately $1\mu m$) layer of photoresist such as Shipley S1800 resist. The photoresist layer may be exposed to ultraviolet light through a photomask comprising holes of a suitable size, shape and arrangement, depending on the size, shape and arrangement of the indentations or dimples (2) which are required. For example, the photomask may comprise holes of about 500nm or $1\mu m$ to $2\mu m$ in diameter. The holes may also be arranged in a desired pitch, for example a regular repeating pattern. The photoresist layer is developed before the silicon is wet etched. Following its formation, the silicon mould may be electroplated. For example, a nickel shim containing the reverse pattern of the dimple structure may be formed by electroplating the initial silicon mould with an approximately $300\mu m$ thick nickel layer. The nickel shim may be used to create a replica or a number of replicas, typically in a polymer, through standard replication techniques, for example by embossing, or by coating with curable polymers which following curing are removed from the shim. The resulting polymer layer is patterned with the original dimple array that was fabricated in the original silicon mould. The replica may then be coated with an appropriately designed optical multilayer (1) which comprises interleaved layers of material (3, 4). This may be achieved by sequentially depositing layers using sputtering (i.e. sputter coating or sputter deposition), on the replica with appropriate materials. Sputtering is a well known physical vapour deposition (PVD) method of depositing thin films. This involves ejecting material from a sputtering target which deposits onto a substrate or layer. The replica may be coated with alternating layers of materials such as silica and zirconia.

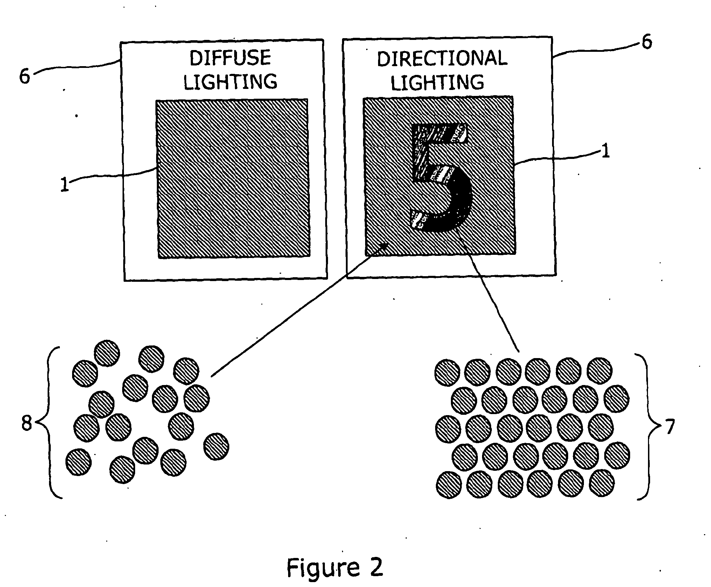

Figure 2 is a representation of an article (6), such as a credit card, comprising an optical multilayer (1) in accordance with the present invention and shows the effects of incident diffuse light and directional light. The article (6) is shown as it would appear when viewed in two different lighting conditions. In the depiction on the left, the article (6) is shown when viewed in diffuse lighting conditions and, on the right, the article (6) is shown when viewed in directional lighting conditions.

In Figure 2, the surface of the article (6) has been modified by the presence of an optical multilayer (1) of an appropriate size and shape, for example a square of approximately 3cm x 3cm. A first region (7) of the optical multilayer which comprises regularly spaced dimples (i.e. a region of constant periodicity) is arranged so as to form the shape of a recognisable character, for example an alphanumeric character (indicated as the number "5" in Figure 2 when viewed under directional lighting), whilst a second region (8) of the multilayer which surrounds the first region (7), comprises a disordered or random arrangement of multilayer dimples. The optical multilayer is designed so that both the first and second regions (7 and 8 respectively) appear to be visually identical in all but highly directional light. When viewed under directional light, for example from a collimated hand-held torch, or via a table-top illuminator and viewer designed for use by a shopkeeper or bank-teller, the first region (7) exhibits diffraction, and the shape of the periodic region (i.e. the at least one first region) becomes apparent. This effect may be viewed directly by the human eye or may be machine-read, utilising a device such as an electronic colour-sensor. Suitable colour sensors may be obtained from Balluff Inc, Ohio, US, including the BFS range of photoelectric full colour detection sensors or silicon photodiodes which may be obtained from Hamamatsu (for example product S10942-01CT). Alternatively, a photographic image may be produced for human inspection.

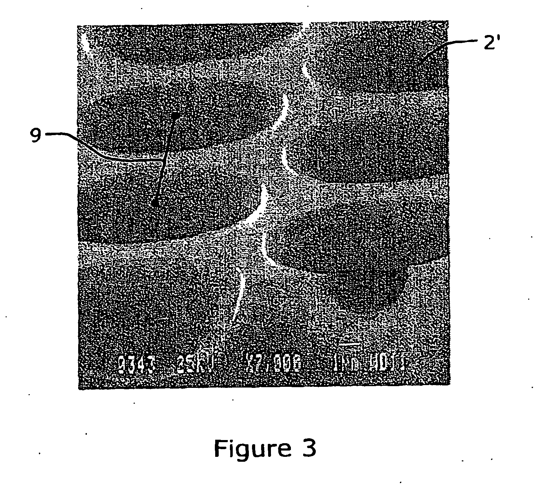

Figure 3 is an image obtained from a scanning electron microscope of an array of optical microstructures (2'), in the form of approximately hemispherical dimples, in silicon fabricated via wet etching through a photoresist layer patterned with an array of $1\mu m$ diameter holes. These holes in the photoresist layer were formed by exposure through a photomask and subsequent development. The periodicity is indicated at (9) as the distance between adjacent, i.e. sequential or consecutive, optical microstructures (2') which are equally spaced.

## Examples

### Example 1

A silicon wafer was coated with a thin (less than $1\mu m$) layer of photoresist. SU-8 is a suitable epoxy-based photoresist. Other suitable examples are poly(methyl methacrylate) and novolacs based photoresists. The photoresist layer was exposed to ultraviolet light through a photomask comprising regions of holes of 1um diameter in a hexagonal pattern, with the holes being separated by (i.e. possessing a periodicity of) $6\mu m$. The hex-

agonal pattern was such that there were regions present comprising at least five holes which were equally spaced in a single direction (i.e. the at least five holes lay in a straight line). In other regions of the photomask the holes were randomly arranged so that less than 5 holes were equally spaced in a single direction. The photoresist layer was subsequently developed such that the resulting holes in the photoresist laid the silicon surface exposed. A liquid silicon etchant was then applied to the surface causing the removal of silicon at an equal rate in all directions (an isotropic etch). The etching process was halted once the silicon removal in the direction along the interface had traversed half the distance between the holes in the photoresist layer. The photoresist layer was subsequently removed. The resulting silicon structure consisted of a hexagonally close packed array of approximately hemispherical dimples with a periodicity of 6μm. Following its formation, this silicon mould was electroplated with 300μm of nickel. This nickel shim was used to create replicas in a UV curing polymer (Norland 65) such that the resulting polymer layer was patterned with the same dimple array that was fabricated in the original silicon mould. The replica (which may be referred to as a replica substrate) was subsequently coated with an optical multilayer consisting of alternating layers of tantala ($T_2O_5$ - refractive index of approximately 2.2) and silica ($SiO_2$ - refractive index of approximately 1.46) by sputtering. Suitable sputterers include the 600 series from KDF Electronics. The layer thicknesses deposited, in order, were: 95.4nm of tantala; 68.8nm of silica; 91.1nm of tantala; 138.2nm of silica; 15.9nm of tantala; 132.9nm of silica; 96.4nm of tantala; 68.8nm of silica.

The optical multilayer exhibited diffractive optical effects when viewed with directional light, wherein the directional light possessed a diameter of circular spatial coherence area which was greater than the distance corresponding to the total distance between five of the optical microstructures of constant periodicity, i.e. greater than 30μm.

**Claims**

1. An optical multilayer (1) comprising at least two textured layers (3, 4), said layers having different refractive indices (n1, n2), wherein each of the textured layers comprise at least one first regions (7), said first region comprising optical microstructures of constant periodicity, and each of the textured layers comprise at least one second region (8), said second region comprising optical microstructures which are disordered, **characterised in that** the optical multilayer consists of or comprises five textured layers, wherein adjacent layers do not possess the same refractive index, and wherein each of the textured layers comprise at least one first region and at least one second region.

2. An optical multilayer according to claim 1, wherein the at least one first region comprising optical microstructures of constant periodicity comprises at least five optical microstructures which are equally spaced in a single direction.

3. An optical multilayer according to claim 1 or claim 2, wherein the distance between adjacent optical microstructures in said at least one first region is greater than 1 μm.

4. An optical multilayer according to claim 3, wherein the distance is 3μm to 20μm.

5. An optical multilayer according to any one of claims 1 to 4, wherein the width or diameter and depth of the optical microstructures are independently of each other selected from about 1 μm to 100μm.

6. An optical multilayer according to any one of claims 1 to 5, wherein the first region of optical microstructures and/or the second region of optical microstructures comprise a plurality of truncated pyramids or pyramids or truncated cones or cones or dimples or a series of depressions in the form of channels or grooves.

7. An optical multilayer according to any one of claims 1 to 6, wherein the at least two textured layers are made from zirconia, zinc sulphide, tantala, silica or magnesium fluoride or a polymer.

8. An optical multilayer according to any one of claims 1 to 7, wherein the at least two textured layers are laid or deposited onto a substrate, and wherein the substrate is transparent or substantially transparent.

9. An optical multilayer according to any one of claims 1 to 7, wherein the at least two textured layers are laid or deposited onto a substrate, and wherein the substrate is opaque.

10. An optical multilayer according to claim 9, wherein the substrate is black.

11. An optical multilayer according to any one of claims 1 to 10, wherein in said at least one first region, optical microstructures are arranged in a hexagonal arrangement or a grid arrangement.

12. An article comprising an optical multilayer according to any one of claims 1 to 11.

13. An article according to claim 12, wherein the article is selected from any one of a banknote, cheque, credit card, identity card, medical card, ticket, legal document, deed, label, casing or shrink-wrap.

**14.** The use of an optical multilayer according to any one of claims 1 to 11, to determine whether or not an article is genuine or counterfeit.

**15.** A method of determining whether or not an object is genuine or counterfeit comprising:

(i) providing an optical multilayer according to any one of claims 1 to 11;
(ii) observing the optical multilayer when illuminated with diffuse light;
(iii) observing the optical multilayer when illuminated with directional light;
(iv) comparing the appearance of the optical multilayer in (ii) and (iii).

**16.** method of making an optical multilayer in accordance with any one of claims 1 to 11, comprising depositing an optical multilayer on to a replica substrate, wherein said replica substrate comprises at least one first region, said first region comprising optical microstructures of constant periodicity and at least one second region, wherein said second region comprises optical microstructures which are disordered.

**Patentansprüche**

**1.** Optische Mehrschicht (1), umfassend mindestens zwei texturierte Schichten (3, 4), wobei die Schichten unterschiedliche Brechungsindizes (n1, n2) aufweisen, wobei jede der texturierten Schichten mindestens einen ersten Bereich (7) umfasst, wobei der erste Bereich optische Mikrostrukturen mit konstanter Periodizität umfasst und jede der texturierten Schichten mindestens einen zweiten Bereich (8) umfasst, wobei der zweite Bereich optische Mikrostrukturen umfasst, die ungeordnet sind, **dadurch gekennzeichnet, dass** die optische Mehrschicht aus fünf texturierten Schichten besteht oder diese umfasst, wobei angrenzende Schichten nicht den gleichen Brechungsindex aufweisen und wobei jede der texturierten Schichten mindestens einen ersten Bereich und mindestens einen zweiten Bereich umfasst.

**2.** Optische Mehrschicht nach Anspruch 1, wobei der mindestens eine erste Bereich, umfassend optische Mikrostrukturen mit konstanter Periodizität, mindestens fünf optische Mikrostrukturen umfasst, die in einer einzigen Richtung gleichmäßig beabstandet sind.

**3.** Optische Mehrschicht nach Anspruch 1 oder Anspruch 2, wobei der Abstand zwischen angrenzenden optischen Mikrostrukturen in dem mindestens einen ersten Bereich größer als 1 μm ist.

**4.** Optische Mehrschicht nach Anspruch 3, wobei der Abstand 3 μm bis 20 μm beträgt.

**5.** Optische Mehrschicht nach einem der Ansprüche 1 bis 4, wobei die Breite oder der Durchmesser und die Tiefe der optischen Mikrostrukturen unabhängig voneinander aus ungefähr 1 μm bis 100 μm ausgewählt werden.

**6.** Optische Mehrschicht nach einem der Ansprüche 1 bis 5, wobei der erste Bereich optischer Mikrostrukturen und/oder der zweite Bereich optischer Mikrostrukturen eine Vielzahl von Pyramidenstümpfen oder Pyramiden oder Kegelstümpfen oder Kegeln oder Dimples oder eine Reihe von Vertiefungen in der Form von Kanälen oder Nuten umfasst bzw. umfassen.

**7.** Optische Mehrschicht nach einem der Ansprüche 1 bis 6, wobei die mindestens zwei texturierten Schichten aus Zirkoniumdioxid, Zinksulfid, Tantaloxid, Siliziumoxid oder Magnesiumfluorid oder einem Polymer hergestellt werden.

**8.** Optische Mehrschicht nach einem der Ansprüche 1 bis 7, wobei die mindestens zwei texturierten Schichten auf ein Substrat gelegt oder darauf abgelagert sind und wobei das Substrat transparent oder im Wesentlichen transparent ist.

**9.** Optische Mehrschicht nach einem der Ansprüche 1 bis 7, wobei die mindestens zwei texturierten Schichten auf ein Substrat gelegt oder darauf abgelagert sind und wobei das Substrat undurchsichtig ist.

**10.** Optische Mehrschicht nach Anspruch 9, wobei das Substrat schwarz ist.

**11.** Optische Mehrschicht nach einem der Ansprüche 1 bis 10, wobei optische Mikrostrukturen in dem mindestens einen ersten Bereich in einer sechseckigen Anordnung oder einer Gitteranordnung angeordnet sind.

**12.** Artikel, umfassend eine optische Mehrschicht nach einem der Ansprüche 1 bis 11.

**13.** Artikel nach Anspruch 12, wobei der Artikel aus einem beliebigen einer Banknote, einem Scheck, einer Kreditkarte, einem Ausweis, einer medizinischen Karte, einem Ticket, einem Rechtsdokument, einer Urkunde, einem Etikett, einem Überzug oder einer Schrumpffolie ausgewählt wird.

**14.** Verwendung einer optischen Mehrschicht nach einem der Ansprüche 1 bis 11, um zu bestimmen, ob ein Artikel echt oder gefälscht ist.

**15.** Verfahren zur Bestimmung, ob ein Objekt echt oder gefälscht ist, umfassend:

(i) Bereitstellen einer optischen Mehrschicht nach einem der Ansprüche 1 bis 11;
(ii) Beobachten der optischen Mehrschicht, wenn sie mit diffusem Licht beleuchtet wird;
(iii) Beobachten der optischen Mehrschicht, wenn sie mit direktionalem Licht beleuchtet wird;
(iv) Vergleichen des Erscheinungsbilds der optischen Mehrschicht in (ii) und (iii).

**16.** Verfahren zur Herstellung einer optischen Mehrschicht nach einem der Ansprüche 1 bis 11, umfassend das Ablagern einer optischen Mehrschicht auf ein Nachbildungssubstrat, wobei das Nachbildungssubstrat mindestens einen ersten Bereich umfasst, wobei der erste Bereich optische Mikrostrukturen mit konstanter Periodizität und mindestens einen zweiten Bereich umfasst, wobei der zweite Bereich optische Mikrostrukturen umfasst, die ungeordnet sind.

## Revendications

**1.** Multicouche optique (1) comprenant au moins deux couches texturées (3, 4), lesdites couches ayant des indices de réfraction différents (n1, n2), chacune des couches texturées comprenant au moins une première région (7), ladite première région comprenant des microstructures optiques de périodicité constante, et chacune des couches texturées comprenant au moins une seconde région (8), ladite seconde région comprenant des microstructures optiques qui sont désordonnées, **caractérisée en ce que** la multicouche optique se compose de ou comprend cinq couches texturées, les couches adjacentes ne possédant pas le même indice de réfraction, et chacune des couches texturées comprenant au moins une première région et au moins une seconde région.

**2.** Multicouche optique selon la revendication 1, ladite au moins une première région qui comprend des microstructures optiques de périodicité constante comprenant au moins cinq microstructures optiques qui sont équidistantes dans une seule direction.

**3.** Multicouche optique selon la revendication 1 ou la revendication 2, ladite distance entre les microstructures optiques adjacentes dans ladite au moins une première région étant supérieure à 1 μm.

**4.** Multicouche optique selon la revendication 3, ladite distance représentant de 3 μm à 20 μm.

**5.** Multicouche optique selon l'une quelconque des revendications 1 à 4, ladite largeur ou ledit diamètre et ladite épaisseur des microstructures optiques étant indépendamment choisis les uns des autres dans l'intervalle allant d'environ 1 μm à 100 μm.

**6.** Multicouche optique selon l'une quelconque des revendications 1 à 5, ladite première région de microstructures optiques et/ou ladite seconde région de microstructures optiques comprenant une pluralité de pyramides tronquées ou de pyramides ou de cônes tronqués ou de cônes ou de creux ou une série de dépressions de la forme de canaux ou de rainures.

**7.** Multicouche optique selon l'une quelconque des revendications 1 à 6, lesdites au moins deux couches texturées étant constituées de zircone, de sulfure de zinc, d'oxyde de tantale, de silice ou de fluorure de magnésium ou d'un polymère.

**8.** Multicouche optique selon l'une quelconque des revendications 1 à 7, lesdites au moins deux couches texturées étant posées ou déposées sur un substrat, et ledit substrat étant transparent ou pratiquement transparent.

**9.** Multicouche optique selon l'une quelconque des revendications 1 à 7, lesdites au moins deux couches texturées étant posées ou déposées sur un substrat, et ledit substrat étant opaque.

**10.** Multicouche optique selon la revendication 9, ledit substrat étant noir.

**11.** Multicouche optique selon l'une quelconque des revendications 1 à 10, dans ladite au moins une première région, les microstructures optiques étant disposées dans un agencement hexagonal ou un agencement de grille.

**12.** Article comprenant une multicouche optique selon l'une quelconque des revendications 1 à 11.

**13.** Article selon la revendication 12, ledit article étant choisi parmi l'un quelconque parmi un billet de banque, un chèque, une carte de crédit, une carte d'identité, une carte médicale, un ticket, un document juridique, un acte notarié, une étiquette, une enveloppe ou un film rétractable.

**14.** Utilisation d'une multicouche optique selon l'une quelconque des revendications 1 à 11, pour déterminer si un article est authentique ou contrefait ou non.

**15.** Procédé permettant de déterminer si un objet est authentique ou contrefait ou non comprenant les étapes consistant à :

(i) fournir une multicouche optique selon l'une quelconque des revendications 1 à 11;

(ii) observer la multicouche optique lorsqu'elle est éclairée avec une lumière diffuse ;
(iii) observer la multicouche optique lorsqu'elle est éclairée avec une lumière directionnelle ;
(iv) comparer l'aspect de la multicouche optique en (ii) et (iii).

16. Procédé de fabrication d'une multicouche optique selon l'une quelconque des revendications 1 à 11, comprenant le dépôt d'une multicouche optique sur un substrat de réplique, ledit substrat de réplique comprenant au moins une première région, ladite première région comprenant des microstructures optiques de périodicité constante, et au moins une seconde région, ladite seconde région comprenant des microstructures optiques qui sont désordonnées.

Figure 1a

Figure 1b

Figure 2

EP 2 817 158 B1

Figure 3

**REFERENCES CITED IN THE DESCRIPTION**

**Patent documents cited in the description**

- WO 0072275 A

- EP 0366858 A1